## Europäisches Patentamt
## European Patent Office
## Office européen des brevets

(19)

(11) Numéro de publication: **0 230 692**
**B1**

(12)
# FASCICULE DE BREVET EUROPEEN

(45) Date de publication du fascicule du brevet:
**22.11.90**

(51) Int. Cl.⁵: **G01N 21/33**

(21) Numéro de dépôt: **86202306.6**

(22) Date de dépôt: **17.12.86**

(54) **Dispositif utilisable pour détecter la richesse des gaz de combustion d'un moteur à explosion.**

(30) Priorité: **23.12.85 FR 8519043**

(43) Date de publication de la demande:
**05.08.87 Bulletin 87/32**

(45) Mention de la délivrance du brevet:
**22.11.90 Bulletin 90/47**

(84) Etats contractants désignés:
**BE DE FR GB IT NL**

(56) Documents cités:
**FR-A- 2 533 316**
**US-A- 3 105 150**
**US-A- 3 161 769**
**US-A- 3 976 891**

**PATENT ABSTRACTS OF JAPAN,**
**vol. 8, no. 215 (P-305)[1652], 2 octobre 1984; &**
**JP-A-59 100 841 (NISSAN JIDOSHA K.K.) 11-06-1984**

(73) Titulaire: **Compagnie Philips Eclairage, Tour Vendôme 204-Rond Point du Pont de Sèvres, F-92516 Boulogne Billancourt(FR)**

(84) Etats contractants désignés: **FR**

(73) Titulaire: **N.V. Philips' Gloeilampenfabrieken, Groenewoudseweg 1, NL-5621 BA Eindhoven(NL)**

(84) Etats contractants désignés: **BE DE GB IT NL**

(72) Inventeur: **Scoarnec, Louis Société Civile S.P.I.D., 209, rue de l'Université, F-75007 Paris(FR)**
Inventeur: **Villain, Jacques Société Civile S.P.I.D., 209, rue de l'Université, F-75007 Paris(FR)**

(74) Mandataire: **Lemoyne, Didier et al, S.P.I.D. 209, rue de l'Université, F-75007 Paris(FR)**

**Description**

L'invention concerne un dispositif utilisable pour détecter la richesse des gaz de combustion d'un moteur à explosion comprenant :
- un premier système optique muni d'une source de rayonnement et d'un collimateur,
- un deuxième système optique muni d'un capteur de rayonnement et d'une lentille de focalisation,
- une enceinte aménagée dans un conduit pouvant être parcourue par des gaz, et située sur un chemin optique entre ces systèmes optiques, dispositif dans lequel au moins un système optique est isolé de l'enceinte par un guide de rayonnement sensiblement cylindrique et possédant deux faces terminales, dont une est à proximité de l'espace de l'enceinte et l'autre est dirigée vers ce système optique.

Un tel dispositif est connu de la demande de brevet français 2 533 316 (Institut Français du Pétrole). Cette demande de brevet décrit un dispositif qui s'adapte aux conduits d'échappement des moteurs à combustion interne, ce dispositif permettant de déceler la mauvaise combustion du mélange carburant-air dans un moteur comme la combustion tardive, incomplète etc ... et d'assurer une régulation électronique, de la richesse d'alimentation, du taux de recyclage des gaz d'échappement et de l'allumage, en effectuant la mesure à proximité immédiate de l'orifice d'échappement de chaque cylindre du moteur.

Dans cette demande de brevet l'ensemble de détection est placé dans une zone très chaude du moteur à explosion et doit être muni de circuits d'admission d'un fluide de refroidissement et de nettoyage ainsi que d'un asservissement attaché à ce fluide (alimentation, circulation, refroidissement). De plus, le fluide de refroidissement entraine une certaine dilution des gaz d'échappement et de ce fait, une diminution de sensibilité et une fluctuation de la valeur, dans la mesure du paramètre caractérisant l'absorption du rayonnement, par exemple ultraviolet, par les gaz.

Afin d'éviter ces inconvénients, le document JP-A 59 100 841 enseigne de disposer des guides de lumière entre les systèmes optiques et l'enceinte de passage de gaz. Toutefois ces guides doivent être munis à leur extrémité, du côté des gaz d'un ensemble de raccordement et de protection relativement complexe et coûteux.

L'objet de l'invention est un dispositif de structure plus simple.

Conformément à l'invention un dispositif du type indiqué dans le préambule est caractérisé par le fait que le guide est un cylindre dont une face est directement assujettie à l'enceinte, et est placée de façon à être en contact avec le flux gazeux. En plaçant une face du guide de rayonnement dans une zone chaude de l'enceinte parcourue par les gaz d'échappement chaud, le nettoyage de la face est réalisé par la pyrolyse des crasses qui pourraient se déposer sur cette face.

Dans une forme préférentielle de l'invention, l'enceinte du dispositif est exclusivement un tronçon du conduit cylindrique canalisant le flux des gaz d'échappement. Il n'est plus nécessaire d'aménager une forme particulière de tubulure pour éviter le contact direct entre le flux des gaz d'échappement et les systèmes optiques.

Particulièrement, le guide de rayonnement est un barreau de silice fondue possédant deux sections de bout formées de deux faces polies optiques. La silice fondue a l'avantage de résister à une température élevée et de posséder une bonne transmission au rayonnement ultraviolet, par exemple.

Dans une autre forme particulière de l'invention une lentille convergente est intégrée au guide de rayonnement l'axe optique de la lentille coïncidant avec l'axe du système optique associé. Il est alors possible d'améliorer le trajet optique du rayonnement de la source du dispositif de détection de façon à concentrer le faisceau émis par le premier système optique sur le détecteur de rayonnement du deuxième système optique.

Avantageusement, sur au moins une des faces d'un guide de rayonnement est déposé un filtre optique interférentiel sélectionnant le passage d'une bande de longueur d'onde déterminée.

D'une autre manière, sur au moins une des faces d'un guide de rayonnement est déposé un composé luminescent convertissant, sur une bande de longueur d'onde déterminée, le spectre de longueur d'onde de la source de rayonnement. Un tel convertisseur peut permettre d'augmenter la sensibilité du capteur de rayonnement et d'améliorer la mesure du paramètre d'absorption.

Dans une forme particulière de réalisation de l'invention, la silice fondue, dont est composé le guide de rayonnement, est dopée par au moins un corps chimique. La silice fondue dont est composée le guide de rayonnement contient quelques pourcents d'un oxyde métallique qui colore la silice dans son volume, ce qui permet de modifier les caractéristiques en transmission de la silice pure pour former par exemple un filtre optique dans la masse.

La source de rayonnement peut être une source d'ultraviolet et/ou de lumière et/ou d'infrarouge.

La description ci-après, en se référant aux dessins annexés, le tout donné à titre d'exemple non limitatif, fera bien comprendre comment l'invention peut être réalisée.

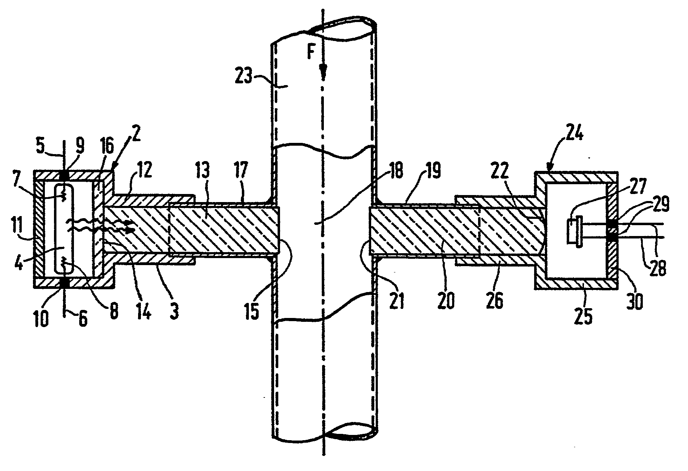

La figure 1 est une vue latérale en coupe du dispositif de détection.

Le dispositif utilisable pour détecter la richesse des gaz de combustion d'un moteur à explosion selon la figure 1 présente un premier système optique 2 formé d'une boîte 3 dans laquelle est logée une source de rayonnement 4 qui dans cet exemple de réalisation conforme à l'invention est une petite source pouvant être une lampe à décharge émettant un rayonnement ultraviolet. En outre, la source de rayonnement peut émettre un rayonnement visible et/ou infrarouge. La source de rayonnement 4 à décharge est alimentée par deux entrées de courant 5 et 6 reliées à des électrodes 7 et 8, entrées de courant traversant la boîte 3 par deux passages isolants 9 et 10. La boîte 3 possède d'une part, un couvercle 11 pour le montage et l'isolement de la source de rayonnement 4 et d'autre part, une fenêtre 12 sensiblement cylindrique dans laquelle est logé longitudinalement, un guide de rayonnement 13 lui-même sensiblement cylindrique et possédant deux faces terminales 14, 15 polies, pour la transmission du rayonnement émis par la source 4, transmission comme représentée par les petites flèches ondulées sur la figure. La boîte 3 posséde, en outre, entre la source 4 et la face terminale 14 du guide de rayonnement 13 un collimateur 16.

La boîte 3 munie du guide de rayonnement 13 se loge coaxialement autour d'un manchon 17 sensiblement cylindrique soudé de préférence perpendiculairement à une enceinte 18 d'un conduit 23 qui peut être parcourue suivant la flèche F par des gaz à analyser. Le guide de rayonnement est placé de façon à ce que sa face terminale 15 soit à proximité de l'enceinte 18.

Un second manchon 19 sensiblement cylindrique soudé de préférence perpendiculairement à l'enceinte 18 est placé coaxialement au manchon 17. Dans le manchon 19 est logé longitudinalement un second guide de rayonnement 20 sensiblement cylindrique possédant deux faces terminales 21, 22 polies, dont une face 21 est à proximité de l'enceinte 18. Ainsi dans cet exemple de réalisation du dispositif conforme à l'invention, l'enceinte 18 est réalisée par un tronçon du conduit 23 cylindrique pouvant canaliser le flux des gaz d'échappement. L'enceinte 18 du conduit 23 pouvant être parcourue par des gaz est située sur un chemin optique entre les deux systèmes optiques 2, 24. Une telle conception permet l'écoulement des gaz sans modifier, ni perturber de façon conséquente leur flux gazeux cylindrique, et de section pratiquement constante. De plus, le fait de placer les deux faces terminales 15, 21 des guides de rayonnement 13, 20 en contact avec le flux gazeux de température relativement élevée fait que ces deux faces subissent un auto-nettoyage par pyrolyse, supprimant ainsi tout système complexe de nettoyage desdites faces.

A l'extrémité du guide de rayonnement 20, du côté de la face terminale 22, s'emmanche le deuxième système optique 24, formé d'une chambre 25 munie d'une fenêtre 26 cylindrique dans laquelle se loge coaxialement le second guide de rayonnement 20. La chambre 25 s'emboîte sur le manchon 19, pour la fixation du système optique 24 sur l'enceinte 18. Dans la chambre 25 est placé un capteur de rayonnement 27. Le capteur 27 peut recevoir une partie de rayonnement issue du premier système optique 2, après que le rayonnement ait traversé le flux gazeux, et renvoie un signal électronique vers un organe de mesure non représenté sur la figure. Le signal électronique passe par des sorties de courant 28 traversant la chambre 25 par des passages isolants 29. La chambre 25 étanche au rayonnement extérieur est fermée par un couvercle 30.

Entre le capteur 27 placé sur le chemin optique du rayonnement émis par la source de rayonnement 4 et le guide de rayonnement 20, peut être placé, outre une lentille de focalisation, un filtre sélectionnant une bande de longueur d'onde en fonction des propriétés d'absorption des gaz parcourant l'enceinte.

Les guides de rayonnement 13, 20 peuvent être aménagés, conformément à l'invention de façon à posséder par exemple, au moins une face polie optique de forme sphérique comme représenté sur la figure 1 par 22 pour former en plus d'un guide de rayonnement une lentille pour donner au rayonnement issu du premier système optique 2, un chemin optique bien défini et pour concentrer, le rayonnement ayant traversé l'enceinte 18, sur le capteur 27.

Les deux guides de rayonnement 13, 20 par exemple en silice peuvent être traitées de façon à sélectionner une bande de longueur d'onde et cela en déposant sur des faces terminales un filtre de type interférentiel ou bien une couche luminescente convertissant du rayonnement UV en un rayonnement d'une autre bande de longueur d'onde, bande dans laquelle le capteur serait plus sensible, ou encore en dopant chimiquement lesdits guides dans la masse.

## Revendications

1. Dispositif utilisable pour détecter la richesse des gaz de combustion d'un moteur à explosion comprenant :
- un premier système optique muni d'une source de rayonnement et d'un collimateur,
- un deuxième système optique muni d'un capteur de rayonnement et d'une lentille de focalisation,
- une enceinte aménagée dans un conduit pouvant être parcourue par les gaz, et située sur un chemin optique entre ces systèmes optiques,
dispositif dans lequel au moins un système optique est isolé de l'enceinte par un guide de rayonnement possédant deux faces terminales dont une est à proximité de l'enceinte et l'autre est dirigée vers ce système optique, caractérisé en ce que ce guide est un cylindre dont une face est directement assujettie à l'enceinte, et placée de façon à être en contact avec le flux gazeux.

2. Dispositif selon la revendication 1, caractérisé en ce que le guide de rayonnement est un barreau de silice fondue possédant deux sections de bout formées de deux faces polies optiques.

3. Dispositif selon la revendication 1, caractérisé en ce qu'une lentille convergente est intégrée au guide de rayonnement, l'axe optique de la lentille coincidant avec l'axe du système optique associé.

4. Dispositif selon la revendication 1, caractérisé en ce que sur au moins une des faces d'un guide de rayonnement est déposé un filtre optique interférentiel.

5. Dispositif selon la revendication 1, caractérisé en ce que sur au moins une des faces d'un guide de rayonnement est déposé un composé luminescent.

6. Dispositif selon la revendication 2, caractérisé en ce que la silice fondue dont est composé le guide de rayonnement est dopée par au moins un corps chimique.

7. Dispositif selon la revendication 1, caractérisé en ce que l'enceinte du dispositif est réalisée par un tronçon du conduit cylindrique canalisant le flux des gaz d'échappement.

## Patentansprüche

1. Vorrichtung zum Detektieren der Reichhaltigkeit der Verbrennungsgase in einem Verbrennungsmotor, die folgende Elemente enthält:

– ein erstes optisches System mit einer Strahlungsquelle und einem Kollimator,
– ein zweites optisches System mit einer Strahlungsmeßzelle und einer Fokussierlinse,
– einen Hohlraum in einem Rohr, der von den Gasen durchflossen werden kann und sich in einem optischen Lichtweg zwischen den optischen Systemen befindet, in welcher Vorrichtung wenigstens ein optisches System durch einen Strahlungsleiter vom Hohlraum isoliert ist, und dieser Leiter zwei Stirnflächen besitzt, von denen eine sich in der Nähe des Hohlraums befindet und die andere diesem optischen System zugewandt ist, dadurch gekennzeichnet, daß dieser Leiter ein Zylinder ist, von dem eine Fläche in bezug auf den Hohlraum derart fest angeordnet ist, daß sie mit dem Gasfluß in Kontakt kommt.

2. Vorrichtung nach Anspruch 1, dadurch gekennzeichnet, daß der Strahlungsleiter ein Quarzglasstab mit zwei Endabschnitten ist, die durch zwei polierte optische Flächen gebildet werden.

3. Vorrichtung nach Anspruch 1, dadurch gekennzeichnet, daß eine Sammellinse im Strahlungsleiter integriert ist, wobei die optische Achse der Linse mit der Achse des zugeordneten optischen Systems zusammenfällt.

4. Vorrichtung nach Anspruch 1, dadurch gekennzeichnet, daß auf wenigstens einer der Flächen eines Strahlungsleiters ein optisches Interferenzfilter angebracht ist.

5. Vorrichtung nach Anspruch 1, dadurch gekennzeichnet, daß auf wenigstens einer der Flächen eines Strahlungsleiters eine leuchtende Zusammensetzung angebracht ist.

6. Vorrichtung nach Anspruch 2, dadurch gekennzeichnet, daß das Quarzglas, aus dem der Strahlungsleiter zusammengesetzt ist, mit wenigstens einem chemischen Körper gedopt ist.

7. Vorrichtung nach Anspruch 1 bis 6, dadurch gekennzeichnet, daß der Hohlraum der Vorrichtung durch einen Abschnitt des zylindrischen Rohrs verwirklicht wird, das den entweichenden Gasfluß kanalisiert.

**Claims**

1. A device suitable for use for the detection of the composition of the combustion gases of an internal cumbustion engine comprising:
– a first optical system provided with a radiation source and with a collimator,
– a second optical system provided with a radiation collector and with a focusing lens,
– a space provided in a conduit that can be traversed by gases and is situated in an optical path between these optical systems,
in which device at least one optical system is isolated from the space by a radiation waveguide having two end faces, one of which is situated in the proximity of the space and the other is directed towards this optical system, characterized in that this waveguide is a cylinder of which one surface is directly fixed in the space and is so positioned as to be in contact with the gas flow.

2. A device as claimed in claim 1, characterized in that the radiation waveguide is a rod of fused silica having two end sections constituted by two polished optical surfaces.

3. A device as claimed in claim 1, characterized in that a converging lens is integrated with the radiation waveguide, the optical axis of the lens coinciding with the axis of the associated optical system.

4. A device as claimed in claim 1, characterized in that an optical interference filter is deposited on at least one of the surfaces of a radiation waveguide.

5. A device as claimed in claim 1, characterized in that a luminescent compound is deposited on at least one of the surfaces of a radiation waveguide.

6. A device as claimed in claim 2, characterized in that the fused silical, of which the radiation waveguide is composed, is doped with at least one chemical substance.

7. A device as claimed in any one of the claims 1 to 6, characterized in that the space of the device is formed by a part of the cylindrical conduit canalizing the flow of the exhaust gases.